**Europäisches Patentamt**

**European Patent Office**

**Office européen des brevets**

(19)

(11) Veröffentlichungsnummer: **0 184 735**
**B1**

(12)

# EUROPÄISCHE PATENTSCHRIFT

(45) Veröffentlichungstag der Patentschrift:
**11.05.88**

(51) Int. Cl.⁴: **H 01 M 10/39**

(21) Anmeldenummer: **85115181.1**

(22) Anmeldetag: **29.11.85**

(54) Elektrochemische Speicherzelle.

(30) Priorität: **08.12.84 DE 3444917**

(43) Veröffentlichungstag der Anmeldung:
**18.06.86 Patentblatt 86/25**

(45) Bekanntmachung des Hinweises auf die Patenterteilung:
**11.05.88 Patentblatt 88/19**

(84) Benannte Vertragsstaaten:
**BE FR GB IT NL**

(56) Entgegenhaltungen:
**EP - A - 0 114 234**
**EP - A - 0 141 353**
**US - A - 4 247 605**

**ULLMANNS ENCYKLOPÄDIE DER TECHNISCHEN CHEMIE, 3. Auflage, Band 1, 1951, "Chemischer Apparatebau und Verfahrenstechnik" URBAN & SCHWARZENBERG, München-Berlin Seite 31**
**ULLMANNS ENCYKLOPÄDIE DER TECHNISCHEN CHEMIE, 4. Auflage, Band 3, 1973, "Verfahrenstechnik und Reaktionsapparate" VERLAG CHEMIE, Weinheim/Bergstraße Seite 28**

(73) Patentinhaber: **BROWN, BOVERI & CIE Aktiengesellschaft, Kallstadterstrasse 1, D-6800 Mannheim (DE)**

(72) Erfinder: **Hasenauer, Dieter, Freudenbergstrasse 13, D-6940 Weinheim (DE)**
Erfinder: **Lenz, Franz, Hans-Thoma-Strasse 16-18, D-6831 Neulussheim (DE)**

(74) Vertreter: **Kempe, Wolfgang, Dr. et al, c/o BROWN, BOVERI & CIE AG ZPT Postfach 351, D-6800 Mannheim 31 (DE)**

## Beschreibung

Die Erfindung bezieht sich auf eine elektrochemische Speicherzelle gemäss dem Oberbegriff des Patentanspruches 1.

Solche elektrochemischen Speicherzellen eignen sich sehr gut als Energiequellen. Sie finden in vermehrtem Masse ihre Anwendung beim Aufbau von Speicherbatterien, die zur Stromversorgung von Elektrofahrzeugen vorgesehen sind.

Ein spezielles Beispiel für diese Speicherzellen sind solche auf der Basis von Natrium und Schwefel, die wiederaufladbar sind und einen Festelektrolyten aus Betaaluminiumoxid besitzen, der den Anodenraum von dem Kathodenraum trennt. Ein Vorteil dieser Speicherzellen besteht darin, dass beim Laden keine elektrochemischen Nebenreaktionen ablaufen. Der Grund dafür ist, dass nur Natriumionen durch den Festelektrolyten gelangen können. Die Stromausbeute solcher Natrium/Schwefel-Speicherzellen liegt daher bei etwa 100%. Bei diesen elektrochemischen Speicherzellen ist das Verhältnis von Energieinhalt zum Gesamtgewicht einer Speicherzelle im Vergleich zum Bleiakkumulator sehr hoch, da die Reaktionsstoffe leicht sind, und bei den elektrochemischen Reaktionen viel Energie frei wird.

Aus der US-PS 4247605 ist eine elektrochemische Speicherzelle auf der Basis von Natrium und Schwefel bekannt, in deren becherförmig ausgebildetem Festelektrolyten ein Sicherheitsbehälter angeordnet ist. Dieser dient zur Aufnahme des Natriums. Die Abmessungen des Sicherheitsbehälters sind so gewählt, dass zwischen seinen Aussenflächen und den Innenflächen des Festelektrolyten rundum ein zusammenhängender Zwischenraum verbleibt, der als Sicherheitsspalt dient, und mit einem als Kapillare wirkenden Material ausgefüllt ist. An der dem Boden des Festelektrolyten zugewandten Seite ist der Sicherheitsbehälter mit einem Loch versehen, über welches das Natrium in den Festelektrolyten, insbesondere in den Sicherheitsspalt austreten kann. Das in dem Sicherheitsspalt enthaltene kapillare Material ist pulver- oder faserförmig ausgebildet. Da dieses Material in dem gesamten Sicherheitsspalt, insbesondere auch in dem Bereich angeordnet ist, in dem sich das Loch des Sicherheitsbehälters befindet, kann es nicht ausgeschlossen werden, dass dieses Loch mit der Zeit durch dieses kapillare Material zugesetzt wird. Dadurch wird der Ausfluss, ggf. auch ein Rückfluss des Natriums aus bzw. in den Sicherheitsbehälter unterbunden, so dass die Funktionsfähigkeit der Speicherzelle sehr stark eingeschränkt bzw. vollständig unterbunden wird.

Der Erfindung liegt deshalb die Aufgabe zugrunde, eine wiederaufladbare elektrochemische Speicherzelle zu schaffen, bei der ein kontinuierlicher Natriumfluss aus dem Sicherheitsbehälter ermöglicht und die Menge des austretenden Natriums auf einen definierten Wert begrenzt werden kann.

Diese Aufgabe wird erfindungsgemäss durch die kennzeichnenden Merkmale des Patentanspruches 1 gelöst.

Durch die Anordnung eines Strömungswiderstandes in der Öffnung des Sicherheitsbehälters kann die Menge des ausströmenden Natriums auf eine definierte Menge begrenzt werden. Vorzugsweise ist der Strömungswiderstand so ausgebildet, dass immer so viel Natrium ausfliessen kann, dass mindestens eine 20- bis 40minütige Entladung gesichert ist. Dies wird dadurch erreicht, dass der Strömungswiderstand mit einer definierten Anzahl von Austrittsöffnungen versehen ist. Vorzugsweise weist der Strömungswiderstand mindestens drei Austrittsöffnungen auf. Die Durchmesser dieser Austrittsöffnungen sind so gewählt, dass sie kleiner sind als die Abmessungen des kapillaren Materials, das innerhalb des Sicherheitsspaltes angeordnet ist, so dass ein Verstopfen der Austrittsöffnungen hierdurch weitgehendst ausgeschlossen ist. Sollte dennoch eine Austrittsöffnung durch dieses kapillare Material verstopft werden, so wird zwar der Strömungswiderstand erhöht, die Menge des austretenden Natriums ist jedoch immer noch gross genug, um die Entladung der Speicherzelle sicher zu stellen.

Erfindungsgemäss wird der Strömungswiderstand durch eine Schraube gebildet, die in das Loch des Sicherheitsbehälters eingeschraubt ist, und deren Längsachse mit einer durchgehenden Bohrung versehen ist. In diese Bohrung kann erfindungsgemäss ein Kerbstift oder ein Sinterstift eingesetzt werden. Bei Verwendung eines Kerbstifts wird dieser zur Erzielung von drei oder mehr Öffnungen in seinem Randbereich mit einer entsprechenden Anzahl von Kerben versehen, die parallel zu seiner Längsachse verlaufen. Diese Kerben bilden die Austrittsöffnungen für das aus dem Sicherheitsbehälter in den Sicherheitsspalt austretende Natriums. Anstelle eines Kerbstifts kann in die Bohrung der Schraube auch ein Sinterstift eingesetzt werden. Vorzugsweise wird ein Stift aus Nickel oder einem anderen natriumbeständigen Material verwendet. Sinterstifte haben gegenüber Kerbstiften den Vorteil, dass sie ein System mit sehr vielen parallelen Poren darstellen, so dass durch Verstopfen einer Pore der Strömungswiderstand nur verhältnismässig wenig verändert wird. Durch die Poren innerhalb des Sinterstiftes werden mehrere Kanäle gebildet, über die das Natrium aus dem Sicherheitsbehälter in den Sicherheitsspalt austreten kann.

Die Erfindung wird nachfolgend anhand einer Zeichnung erläutert.

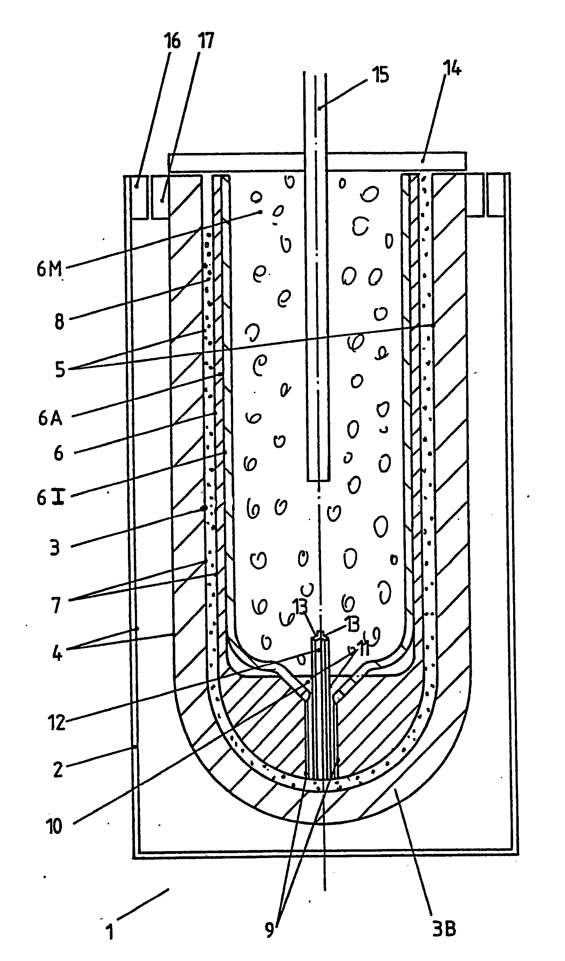

Die einzige Figur zeigt, eine elektrochemische Speicherzelle im Vertikalschnitt. Die hier darstellte Speicherzelle 1 wird nach aussenhin durch ein metallisches Gehäuse 2 begrenzt, das becherförmig ausgebildet ist. Im Inneren dieses Gehäuses 2 ist ein ebenfalls becherförmig ausgebildeter Festelektrolyt 3 angeordnet. Die Abmessungen des Festelektrolyten 3 sind so gewählt, dass zwischen ihm und der Innenfläche des Gehäuses 2 rundum ein zusammenhängender Zwischenraum 4 verbleibt, der bei dem hier dargestellten Ausführungsbeispiel als Kathodenraum dient. Der Innenraum des Festelektrolyten 3 dient als Anodenraum 5. Innerhalb desselben ist ein Sicherheitsbehälter 6 angeordnet, der doppelwandig ausgebildet ist. Die äussere Begrenzungswand 6A des Sicherheitsbehälters ist aus Aluminium gefertigt, während die innere Begrenzungswand 6I

aus Stahl hergestellt ist. Die Form des Sicherheitsbehälters 6 ist an die des Festelektrolyten 3 angepasst. Die Abmessungen des Sicherheitsbehälters 6 sind so gewählt, dass zwischen seiner Aussenfläche und der Innenfläche des Festelektrolyten 3 ein zusammenhängender Spalt 7 verbleibt, der mit einem kapillaren Material 8 ausgefüllt ist. Dieses kapillare Material 8 hat die Aufgabe, das aus dem Sicherheitsbehälter 6 austretende Natrium entlang der gesamten Innenfläche des Festelektrolyts zu verteilen, so dass diese immer und überall mit Natrium benetzt ist. Gegenüber dem Boden 3B des Festelektrolyten ist der Sicherheitsbehälter 6 mit einem durchgehenden Loch 9 versehen, innerhalb dessen ein Strömungswiderstand 10 angeordnet ist. Bei dem hier dargestellten Ausführungsbeispiel wird der Strömungswiderstand durch eine Schraube gebildet, welche in das Loch 9 eingedreht ist. Die Schraube weist eine Bohrung 11 auf, die in der Längsachse der Schraube 10 verläuft. Die Bohrung 11 verbindet den Innenraum des Sicherheitsbehälters 6 mit dem Sicherheitsspalt 7. Bei dem hier dargestellten Ausführungsbeispiel ist in die Bohrung 11 ein Kerbstift 12 eingesetzt. Dieser ist in seinem Randbereich mit drei Kerben 13 versehen, die zwischen dem Kerbstift 12 und der inneren Begrenzungsfläche der Schraube 10 drei Austrittsöffnungen bilden, über welche das im Sicherheitsbehälter 6 angeordnete Natrium in den Sicherheitsspalt 7 strömen kann. Innerhalb des Sicherheitsbehälters 6 ist ausser dem Natrium noch eine Metallwolle 6M angeordnet, die den Stromkollektor 15 fest umgibt und somit eine gute elektrisch leitende Verbindung erzeugt. Als Stromkollektor dient ein korrosionsbeständiger Metall- oder Graphitstab 15, der weit in den Innenraum des Sicherheitsbehälters 6 hineinragt. Das zweite Ende des Stromkollektors ist durch eine Verschlussplatte 14, die den Innenraum des Festelektrolyten 3 nach aussenhin verschliesst, hindurchgeführt und steht einige Millimeter über die Speicherzelle 1 nach aussen über. Der Sicherheitsbehälter 6 und der Sicherheitsspalt 7 bilden zusammen den Anodenraum 5. Der in dem Loch 9 des Sicherheitsbehälters 6 angeordnete Kerbstift 12 dient dazu, das Loch 9 in mehrere Austrittsöffnungen 13 aufzuteilen, so dass ein Verstopfen desselben durch das im Sicherheitsspalt 7 angeordnete kapillare Material weitestgehend ausgeschlossen ist. Zum anderen wird durch den Kerbstift 12 die Menge des aus dem Sicherheitsbehälter 6 austretenden Natriums auf eine definierte Menge begrenzt. Diese Menge soll gerade immer so gross sein, dass die innere Begrenzungsfläche des Festelektrolyten 3 vollständig von dem Natrium benetzt ist. Bei dem hier dargestellten Ausführungsbeispiel ist die Bohrung 11 ca. 5 mm lang und weist einen Durchmesser von 1,5 mm auf. Der Kerbstift 12 ist mit drei Kerben 13 ausgerüstet, deren Grösse so bemessen ist, dass etwa 2,5±0,25 g Na/h aus dem Sicherheitsbehälter austreten können. Innerhalb des Sicherheitsbehälters 6 sind etwa 50 g Natrium angeordnet.

Die damit aus dem Sicherheitsbehälter ausströmende Menge an Natrium entspricht der Menge, die für eine 30minütige Entladung erforderlich ist.

Anstelle des hier dargestellten Kerbstiftes 12 kann erfindungsgemäss auch ein Sinterstift 12 verwendet werden, der aus Nickel gefertigt ist. Der Sinterstift 12 weist parallel zu seiner Längsachse viele Poren auf, durch welche Austrittskanäle für das im Sicherheitsbehälter 6 befindliche Natrium gebildet werden. Die Gefahr eines Verstopfens dieser Kanäle ist noch wesentlich geringer als bei Austrittsöffnungen, die durch die Kerben 13 des Kerbstiftes 12 gebildet werden.

Der Verschluss der Speicherzelle nach aussenhin erfolgt zum einen durch die Platte 14, die den Innenraum des Festelektrolyten 3 verschliesst. Der Kathodenraum 4 wird durch einen Druckring 16 verschlossen, der über ein Glaslot 17 an der Aussenfläche des Festelektrolyten befestigt ist. Dieser Druckring 16 ist mit der Innenfläche des metallischen Gehäuses 2 verschweisst, so dass der Kathodenraum 4 nach aussenhin vollständig und dauerhaft verschlossen ist.

## Patentansprüche

1. Elektrochemische Speicherzelle auf der Basis von Natrium und Schwefel mit einem Anodenraum (5) und einem Kathodenraum (4), die durch einen becherförmigen Festelektrolyten (3) voneinander getrennt sind, innerhalb dessen ein Sicherheitsbehälter (6) für die Aufnahme des Natriums angeordnet ist, der über ein Loch (9) mit dem Innenraum des becherförmigen Festelektrolyten (3) in Verbindung steht, dadurch gekennzeichnet, dass im Loch (9) des Sicherheitsbehälters (6) ein Strömungswiderstand (10) angeordnet ist, der mit mehreren Austrittsöffnungen (13) für das Natrium versehen ist.

2. Speicherzelle nach Anspruch 1, dadurch gekennzeichnet, dass der Strömungswiderstand (10) durch eine Schraube mit Aussengewinde gebildet ist, die in das Loch (9) geschraubt und eine in ihrer Längsachse verlaufende durchgehende Bohrung (11) aufweist, in die ein Kerbstift (12) oder ein Sinterstift eingesetzt ist.

3. Speicherzelle nach einem der Ansprüche 1 oder 2, dadurch gekennzeichnet, dass der Kerbstift (12) in seiner Aussenfläche drei oder mehrere in definiertem Abstand voneinander angeordnete Kerben (13) aufweist, die parallel zur Längsachse des Kerbstiftes (12) verlaufen.

4. Elektrochemische Speicherzelle nach einem der Ansprüche 1 bis 3, dadurch gekennzeichnet, dass der Sinterstift (12) aus einem offenporigen korrosionsbeständigen Material gefertigt ist, derart, dass er mehrere zu seiner Längsachse verlaufende Kanäle aufweist.

5. Elektrochemische Speicherzelle nach Anspruch 4, dadurch gekennzeichnet, dass der Sinterstift (12) aus Nickel gefertigt ist.

## Claims

1. Electrochemical storage cell based on sodium and sulphur with an anode space (5) and a cathode space (4) which are separated from each other by a beaker-shaped solid electrolyte (3) inside which a safety container (6) is disposed for receiving the sodium, which safety container is in communication with the beaker-shaped solid electrolyte via a hole (9), characterized in that, in the hole (9) of the safety container (6) there is disposed a flow resistance (10) which is provided with several exit openings (13) for the sodium.

2. Storage cell according to Claim 1, characterized in that the flow resistance (10) is formed by a screw with external thread which is screwed into the hole (9) and has a through drilled hole (11) extending along its longitudinal axis, into which hole a grooved pin (12) or a sintered pin is inserted.

3. Storage cell according to one of the Claims 1 or 2, characterized in that the grooved pin (12) has, in its outside surface, three or more grooves (13) which are disposed at a defined distance from each other and which extend parallel to the longitudinal axis of the grooved pin (12).

4. Electrochemical storage cell according to one of the Claims 1 to 3, characterized in that the sintered pin (12) is manufactured from an open-pore corrosion-resistant material in a manner such that it has several channels extending parallel to its longitudinal axis.

5. Electrochemical storage cell according to Claim 4, characterized in that the sintered pin (12) is manufactured from nickel.

## Revendications

1. Cellule d'accumulateur électrochimique à base de sodium et de soufre, comportant un espace anodique (5) et un espace cathodique (4) qui sont séparés l'un de l'autre par un électrolyte solide en forme de godet (3) à l'intérieur duquel est agencé un récipient de sécurité (6) destiné à recevoir le sodium et communiquant par un trou (9) avec l'espace intérieur de l'électrolyte solide en forme de godet, caractérisée par le fait qu'une résistance hydraulique (10) munie de plusieurs ouvertures de sortie (13) pour le sodium est agencée dans le trou (9) du récipient de sécurité (6).

2. Cellule d'accumulateur selon revendication 1, caractérisée par le fait que la résistance hydraulique est constituée par une vis dotée d'un filetage extérieur et vissée dans le trou (9), et d'un alésage (11) qui la traverse selon son axe longitudinal et dans lequel est insérée une tige (12) cannelée ou frittée.

3. Cellule d'accumulateur selon l'une des revendications 1 ou 2, caractérisée par le fait que la tige cannelée (12) présente, dans sa surface extérieure, au moins trois cannelures (13) qui sont séparées les unes des autres par un intervalle défini et suivent des tracés parallèles à l'axe longitudinal de cette tige cannelée (12).

4. Cellule d'accumulateur électrochimique selon l'une des revendications 1 à 3, caractérisée par le fait que la tige frittée (12) est faite d'un matériau résistant à la corrosion, ayant des pores ouverts, de manière à présenter plusieurs canaux parallèles à son axe longitudinal.

5. Cellule d'accumulateur électrochimique selon revendication 4, caractérisée par le fait que la tige frittée (12) est en nickel.